# EUROPÄISCHE PATENTSCHRIFT

(11) **EP 1 461 235 B1**
(45) Veröffentlichungstag und Bekanntmachung des Hinweises auf die Patenterteilung: **22.11.2006**
(21) Anmeldenummer: 02796515.1
(22) Anmeldetag: 18.12.2002
(51) Int. Cl.: B60S 1/40

(54) **SCHEIBENWISCHER MIT EINEM WISCHARM**
WINDSCREEN WIPER COMPRISING A WIPER ARM
ESSUIE-GLACE MONOBRAS

(30) Priorität: 19.12.2001 DE 10162399
(43) Veröffentlichungstag der Anmeldung: 29.09.2004
(73) Patentinhaber: ROBERT BOSCH GMBH, 70442 Stuttgart (DE)
(72) Erfinder: OP'T ROODT, Inigo, B-3500 Hasselt (BE)
(86) Internationale Anmeldenummer: PCT/DE2002/004654
(87) Internationale Veröffentlichungsnummer: WO 2003/051696

(56) Entgegenhaltungen:
- EP-A- 0 053 960
- DE-A- 19 924 662
- GB-A- 1 599 534
- US-A- 4 649 591
- US-A- 5 435 041

## Beschreibung

### Stand der Technik

Die Erfindung geht von einem Scheibenwischer mit einem Wischarm nach dem Oberbegriff des Anspruchs 1 aus.

Bekannte Scheibenwischer weisen einen Wischarm auf, der auf einer Wischerwelle sitzt. Diese wird von einem Wischermotor angetrieben. Mit dem freiem Ende des Wischarms ist ein Wischblatt gelenkig verbunden. Es besitzt in der Regel ein mehrgliederiges Tragbügelsystem mit einem Mittelbügel. An diesem sind untergeordneten Bügel angelenkt, von denen zumindest einige mit Krallen an ihren Enden eine Wischleiste halten. Es sind auch gelenklose Wischblätter bekannt, die anstelle des Tragbügelsystems ein senkrecht zur Fahrzeugscheibe federndes, elastisches Tragelement besitzen, das aus Kunststoff hergestellt ist. Um die Federeigenschaft zu verbessern, kann es mindestens eine Federschiene aus Federstahl aufweisen. Das Tragelement besitzt im unbelasteten Zustand eine stärkere Krümmung als die Fahrzeugscheibe, so dass sich die Wischleiste unter der Anpresskraft des Wischarms mit einer geeigneten Druckverteilung an die Fahrzeugscheibe anlegt.

Gelenklose Wischblätter bauen sehr niedrig, was bezüglich ihres strömungstechnischen Verhaltens und der Geräuschentwicklung im Fahrtwind sehr günstig ist. Aus der DE 199 24 662 A1 ist ein Scheibenwischer mit einem gelenklosen Wischblatt bekannt, das über ein so genanntes "Sidelock-System" an einem Wischarm angelenkt ist. Hierzu ist ein Stift an dem freien Ende des Wischarms, der ein zur Fahrzeugscheibe hin offenes, u-förmiges Profil aufweist, seitlich und quer zu dessen Längsrichtung und zu dem Wischblatt zeigend vernietet. Der Stift ist in einer Lagerbohrung eines Verbindungsteils schwenkbar gelagert, welches fest mit dem Tragelement des Wischblatts verbunden ist.

Parallel zum Stift ist am Wischarm in Längsrichtung versetzt eine Brücke angeordnet, die an ihrem freien Ende zur Seite des Stifts hin abgewinkelt ist. In einer Montageposition, in der das Wischblatt quer zur Längsrichtung des Wischarms gehalten wird, kann der Stift in die Lagerbohrung des Verbindungsteils geschoben werden. Wird das Wischblatt anschließend in die Längsrichtung des Wischarms gedreht, übergreift die Brücke das Wischblatt und verriegelt es mit ihrem abgewinkelten Ende, so dass das Wischblatt im montierten Zustand auf dem Stift zwischen dem abgewinkelten Ende der Brücke und dem Wischarm geführt ist. Die Brücke taucht in der Betriebsstellung des Wischblatts in eine entsprechende Nut des Verbindungsteils ein und schließt etwa bündig mit der Oberseite des Verbindungsteils ab. Zur Demontage muss das Wischblatt in die entgegengesetzte Richtung geschwenkt werden, bis das abgewinkelte Ende außer Eingriff gebracht ist und das Wischblatt vom Stift gezogen werden kann.

Aus der US 4 980 944 A1 ist ein weiteres Sidelock-System mit einem zylindrischen Adapter bekannt, der zum Ausgleichen unterschiedlicher Stiftdurchmesser dient. Der Adapter besitzt eine Lagerbohrung, die exzentrisch zur äußeren Kontur des Adapters angeordnet ist. Die Exzentrizität ist dabei so gewählt, dass in einem Bereich des Umfangs des Adapters ein durchgehender Längsschlitz entsteht. Der Adapter wird zur Montage zusammengedrückt und in zwei Öffnungen eines u-förmigen Bügels eines Wischleistenträgers gefügt. Nach dem Einfädeln nimmt der Adapter seine ursprüngliche Form wieder ein und drückt mit seinem Umfang gegen die Öffnungen in den Schenkeln des U-Profils. Ein Federklipp, der an der Grundfläche des U-Profils angeordnet ist und in den Längsschlitz eingreift, sichert den Adapter gegen Verdrehen. Ferner hält er ihn in axialer Richtung, indem er sich an seitlichen Schultern des Adapters abstützt. In einem nächsten Montageschritt kann der am freien Ende des Wischarms befestigte Stift in die Durchgangsbohrung gesteckt werden.

### Vorteile der Erfindung

Nach der Erfindung weist das Wischblatt ein Tragbügelsystem mit einem Mittelbügel auf, der einen Einhängekasten besitzt, dessen Seitenwände durch einen Gelenkbolzen miteinander verbunden sind und in Längsrichtung zum Gelenkbolzen versetzt jeweils mindestens einen Durchzug aufweisen. Solche an sich üblichen Wischblätter werden mit Wischarmen verwendet, die mit ihrem hakenförmigen Ende von oben in den Einhängekasten eingreifen und unter Verwendung eines Adapters den Gelenkbolzen umfassen oder mit zwei Rastzapfen in zwei einander gegenüber liegende Durchzüge eingreifen.

Nach der Erfindung ist von oben in den Einhängekasten des Wischblatts ein Adapter aus Kunststoff mit einem blockförmigen Mittelteil eingesetzt, der mit seitlichen Führungsflächen an den Innenseiten der Seitenwände des Einhängekastens anliegt. Eine Deckwand des Adapters steht mit Kragen seitlich über die Seitenwände, wobei die Kragen im Bereich der Brücke Führungsflächen bilden, an denen im montierten Zustand eine Anlagefläche des Wischarms und das abgewinkelte Ende der Brücke anliegen. Die Kragen bilden im Bereich von mindestes zwei einander gegenüber liegenden Durchzügen Lageraugen, die außen am Einhängekasten angeordnet und durch längs verlaufende Schlitze von dem Mittelteil getrennt sind. Die Schlitze sind auf die Stärke der Seitenwände abgestimmt. Der Mittelteil weist eine zu den Lageraugen passende Lagerbohrung auf. Im montierten Zustand wird der Adapter durch einen Klipp im Mittelteil mit Rastnasen auf dem Gelenkbolzen des Wischblatts gehalten.

Durch den erfindungsgemäßen Adapter kann ein Wischarm, dessen freies Ende mit einem Querstift für ein Sidelock-System versehen ist, auch für ein Wischblatt mit einem Tragbügelsystem verwendet werden. Bezüglich der Windgeräusche und Strömungswiderstände lassen sich die Vorteile, die mit der flachen, niedrigen Bauweise des Sidelock-Systems verbunden sind, mit einfachen Mittel auch bei Wischblättern mit einem Tragbügelsystem erzielen. Dabei bleiben vorteilhafterweise die Form und die Abmessung des Wischarms und des Wischblatts erhalten, so dass keine konstruktiven Veränderungen bzw. neue Werkzeuge zum Fertigen der Bauteile notwendig sind. Ferner werden die Teile des Wischarms und des Wischblatts, die in der Regel aus Metall, nämlich Blech, gefertigt sind, durch den Adapter aus Kunststoff gegeneinander isoliert, so dass die Bewegungsgeräusche und der Verschleiß minimiert werden. Hierzu sind zweckmäßigerweise die Lageraugen, die Lagerbohrung und der Stift in ihren Durchmessern und ihren Positionen so auf die Durchzüge und den Klipp abgestimmt, dass im Betrieb des Scheibenwischers kein Kontakt zwischen dem Stift und dem Wischblatt entsteht. Zudem besitzt Kunststoff in der Regel gute Gleiteigenschaften für die Lagerung des Stifts.

Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Explosionsdarstellung einer Gelenkverbindung zwischen einem Wischarm und einem Wischblatt,

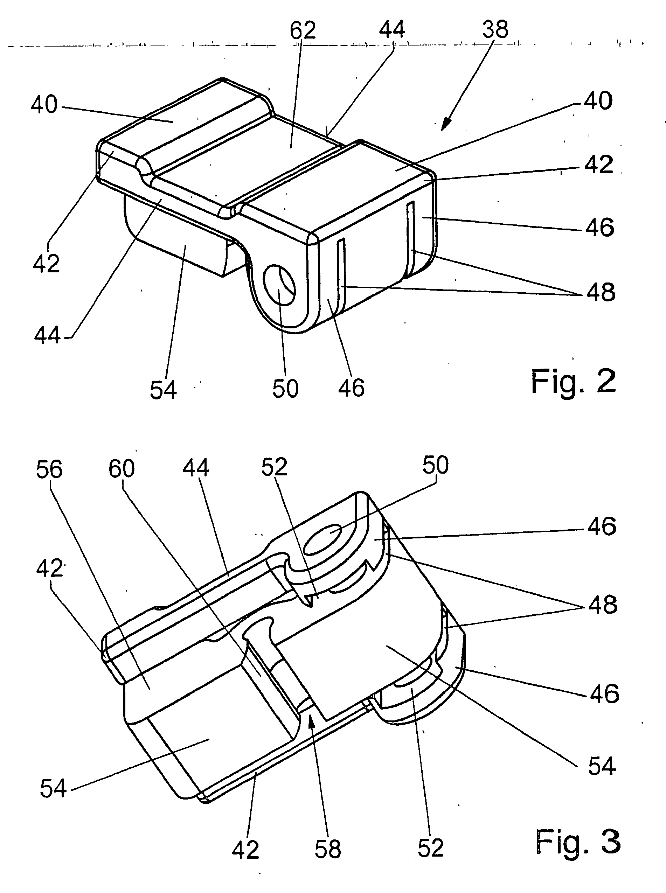

- Fig. 2: eine perspektivische Ansicht eines Adapters von oben und
- Fig. 3: eine perspektivische Ansicht des Adapters von unten.

### Beschreibung des Ausführungsbeispiels

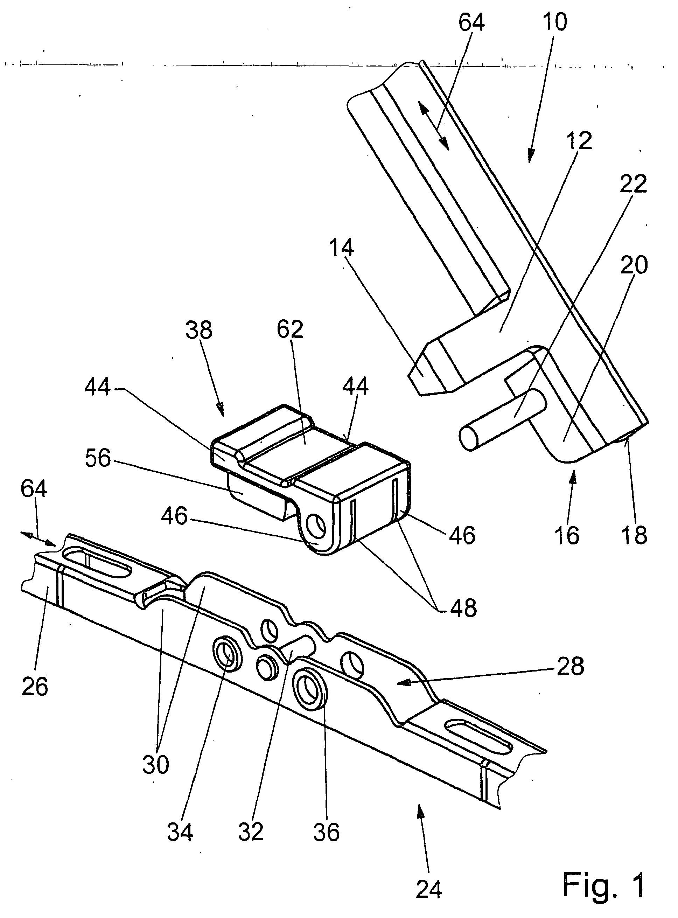

Von einem Scheibenwischer sind nur die Teile eines Wischarms 10 und eines Wischblatts 24 (Fig. 1) dargestellt, so weit es für das Verständnis der Erfindung notwendig ist. Der Wischarm 10 besitzt ein u-förmiges Profil 16, an dessen Schenkeln 18 seitlich, quer zur Längsrichtung 64 und zum Wischblatt 24 zeigend ein Stift 22 befestigt ist, so dass das Wischblatt 24 nach dem Sidelock-System montiert werden kann und eine niedrige Bauhöhe des Scheibenwischers erreicht wird. Ferner ist am freien Ende des Wischarms 10 eine Brücke 12 angeformt, welche parallel zum Stift 22 und in Längsrichtung 64 relativ zu diesem versetzt angeordnet ist und ein abgewinkeltes Ende 14 aufweist. Das Wischblatt 24 besitzt ein Tragbügelsystem, von dem ein Mittelbügel 26 dargestellt ist, der einen Einhängekasten 28 besitzt, dessen Seitenwände 30 durch einen Gelenkbolzen 32 miteinander verbunden sind. Außerdem sind zu beiden Seiten des Gelenkbolzens 32 in Längsrichtung 64 versetzt in den Seitenwänden 30 jeweils zwei einander gegenüber liegende Durchzüge 34 angeordnet.

Das Wischblatt 24 wird mit Hilfe eines Adapters 38 mit dem Wischarm 10 verbunden. Der Adapter 38 besteht im wesentlichen aus einem blockförmigen Mittelteil 54 mit seitlichen Führungsflächen 56 und einer Deckwand 40 mit seitlich angeformten Kragen 42, die durch Schlitze 48 vom Mittelteil 54 getrennt sind. Im montierten Zustand greifen die Seitenwände 30 des Einhängekastens 28 in die Schlitze 48 ein, wobei sich der Mittelteil 54 innen an den Seitenwänden 30 des Einhängekastens 28 abstützt. Der Mittelteil 54 weist einen quer verlaufenden Klipp 58 auf, der im montierten Zustand mit Rastnasen 60 den Gelenkbolzen 32 des Wischblatts 24 umfasst und so den Adapter 38 im Einhängekasten 28 fixiert. Der Mittelteil 54 weist ferner eine Lagerbohrung 50 für den Stift 22 auf, die im montierten Zustand mit den Durchzügen 34 fluchtet, aber im Durchmesser geringfügig kleiner gehalten ist als die Durchzüge 34, damit ein metallischer Kontakt zwischen dem Stift 22 und den Durchzügen 34 vermieden wird.

Im Bereich der Lagerbohrung 50 bilden die Kragen 42 Lageraugen 46. Die Lagerbohrung 50 ist durch die Lageraugen 46 verlängert. An ihren Außenseiten weisen die Kragen 42 Führungsflächen 44 auf, die im montierten Zustand auf der einen Seite an einer Anlagefläche 20 des Wischarms 10 und auf der anderen Seite an dem abgewinkelten Ende 14 der Brücke 12 anliegen. Die Lageraugen 46 besitzen ferner zum Schlitz 48 hin Ausnehmungen 52 für Ränder 36, die in der Regel an den Durchzügen 34 nach außen angeformt sind.

Bei der Montage wird zunächst der Adapter 38 in den Einhängekasten 28 des Wischblatts 24 eingesetzt und zusammen mit dem Wischblatt 24 um die Drehachse des Wischblatts 24 senkrecht zur Längsrichtung 64 des Wischarms 10 gedreht, so dass der Stift 22 in die Lagerbohrung 50 des Adapters 38 eingeschoben werden kann. Danach wird das Wischblatt 24 in seine Betriebsstellung zurückgedreht, in der das Wischblatt 24 etwa parallel zum Wischarm 10 verläuft. Dabei greift die Brücke 12 über das Wischblatt 24, wobei ihr abgewinkeltes Ende 14 das Wischblatt 24 axial verriegelt, indem es an der zugeordneten Führunsfläche 44 des Adapters 38 anliegt. Gleichzeitig taucht die Brücke 12 in eine entsprechende Senke 62 der Deckwand 40 des Adapters 38 ein. Die Tiefe der Senke 62 ist auf die Materialstärke der Brücke 12 so abgestimmt, dass die äußere Oberfläche der Brücke 12 etwa bündig mit der angrenzenden Oberfläche der Deckwand 40 abschließt.

## Patentansprüche

1. Scheibenwischer mit einem Wischarm (10), an dessen freiem Ende seitlich, quer zur Längsrichtung (64) und zu einem Wischblatt (24) zeigend ein Stift (22) zum gelenkigen Verbinden des Wischblatts (24) befestigt ist, der in einer Durchgangsöffnung des Wischblatts (24) steckt und in einer montierten Stellung durch eine Brücke (12) axial verriegelt ist, die parallel zum Stift (22) am Wischarm (10) angeordnet ist und mit einem abgewinkelten Ende (14) das Wischblatt (24) übergreift, **dadurch gekennzeichnet, dass** das Wischblatt (24) ein Tragbügelsystem mit einem Mittelbügel (26) aufweist, der einen Einhängekasten (28) besitzt, dessen Seitenwände (30) durch einen Gelenkbolzen (32) miteinander verbunden sind und in Längsrichtung (64) zum Gelenkbolzen (32) versetzt jeweils mindestens einen Durchzug (34) aufweisen, dass von oben in den Einhängekasten (28) ein Adapter (38) aus Kunststoff mit einem blockförmigen Mittelteil (54) eingesetzt ist, der mit seitlichen Führungsflächen (56) an den Innenseiten der Seitenwände (30) anliegt und dessen Deckwand (40) mit Kragen (42) seitlich über die Seitenwände (30) übersteht, die im Bereich der Brücke (12) Führungsflächen (44) bilden, an denen eine Anlagefläche (20) des Wischarms (10) und das abgewinkelte Ende (14) der Brücke (12) im montierten Zustand anliegen, und dass die Kragen (42) im Bereich von mindestes zwei einander gegenüber liegenden Durchzügen (34) Lageraugen (46) bilden, die außen am Einhängekasten (28) angeordnet und durch Schlitze (48) von dem Mittelteil (54) getrennt sind, das eine zu den Lageraugen (46) passende Lagerbohrung (50) aufweist, wobei der Adapter (38) durch einen Klipp (58) im Mittelteil (54) mittels Rastnasen (60) im montierten Zustand auf dem Gelenkbolzen (32) gehalten wird.

2. Scheibenwischer nach Anspruch 1, **dadurch gekennzeichnet, dass** die Deckwand (40) des Adapters (38) im Bereich der Brücke (12) eine quer verlaufende Senke (62) aufweist, deren Tiefe der Material stärke der Brücke (12) angepasst ist.

3. Scheibenwischer nach Anspruch 1 oder 2, **dadurch gekennzeichnet, dass** die Durchzüge (34) nach außen weisende Ränder (36) und die Lageraugen (46) an ihren Innenseiten entsprechende Ausnehmungen (52) haben.

4. Scheibenwischer nach einem der vorhergehenden Ansprüche, **dadurch gekennzeichnet, dass** die Lageraugen (46), die Lagerbohrung (50) und der Stift (22) in ihren Durchmessern und ihrer Positionen so auf die Durchzüge (34) und den Klipp (58) abgestimmt sind, dass im Betrieb des Scheibenwischers kein Kontakt zwischen dem Stift (22) und dem Wischblatt (24) entsteht.

## Claims

1. Windscreen wiper with a wiper arm (10), to the free end of which, laterally and facing transversely to the longitudinal direction (64) and to a wiper blade (24), a pin (22) is attached for the articulated connection of the wiper blade (24), which pin is inserted in a through opening in the wiper blade (24) and is locked axially in an assembled position by means of a bridge (12), which is arranged parallel to the pin (22) on the wiper arm (10) and engages over the wiper blade (24) with an angled end (14), **characterized in that** the wiper blade (24) has a supporting yoke system with a central yoke (26), which possesses a carrier box (28), the side walls (30) of which are connected to one another by means of a hinge bolt (32) and, in each case offset in the longitudinal direction (64) in relation to the hinge bolt (32), have at least one eyelet (34), **in that** an adapter (38) made of plastic is inserted from above into the carrier box (28) by means of a block-shaped central part (54), which bears with lateral guide surfaces (56) against the insides of the side walls (30), and the top wall (40) of which projects with collars (42) laterally above the side walls (30) which, in the region of the bridge (12), form guide surfaces (44) with which a contact surface (20) of the wiper arm (10) and the angled end (14) of the bridge (12) make contact in the installed state, and **in that**, in the region of at least two mutually opposite eyelets (34), the collars (42) form bearing lugs (46) which are arranged on the outside of the carrier box (28) and are separated by slots (48) from the central part (54), which has a bearing hole (50) matching the bearing lugs (46), the adapter (38) being held by a clip (58) in the central part (54) on the hinge bolt (32) in the fitted state by means of latching tabs (60).

2. Windscreen wiper according to Claim 1, **characterized in that**, in the region of the bridge (12), the top wall (40) of the adapter (38) has a depression (62) which runs transversely and the depth of which is matched to the material thickness of the bridge (12).

3. Windscreen wiper according to Claim 1 or 2, **characterized in that** the eyelets (34) have outwardly pointing edges (36) and the bearing lugs (46) have corresponding recesses (52) on their insides.

4. Windscreen wiper according to one of the preceding claims, **characterized in that** the bearing lugs (46), the bearing hole (50) and the pin (22) are matched in their diameters and their positions to the eyelets (34) and the clip (58) in such a manner that there is no contact between the pin (22) and the wiper blade (24) during operation of the windscreen wiper.

## Revendications

1. Essuie-glace comportant un bras (10) dont l'extrémité libre est fixée latéralement, transversalement à la direction longitudinale (64), une broche (22) dirigée vers le balai d'essuie-glace (24) pour relier de manière articulée le balai d'essuie-glace (24), cette broche venant dans un orifice traversant du balai d'essuie-glace (24) et à l'état monté, cette broche est verrouillée axialement par un pontet (12) parallèle à la broche (22) sur le bras d'essuie-glace (10) en chevauchant le balai d'essuie-glace (24) par une extrémité repliée (14),
**caractérisé en ce que**
le balai d'essuie-glace (24) comporte un système de palonniers avec un palonnier central (26) muni d'un caisson d'accrochage (28) dont les parois latérales (30) sont reliées par un axe d'articulation (32) et ont chaque fois au moins un passage (34) décalé dans la direction longitudinale (64) par rapport à l'axe d'articulation (32),
et en vue de dessus le boîtier d'accrochage (28) reçoit un adaptateur (38) en matière plastique avec un moyen antiblocage (54) s'appliquant par des surfaces de guidage latérales (56) contre les côtés intérieurs des parois latérales (30) et sa paroi supérieure (40) déborde latéralement des parois latérales (30) par des rebords (42) constituant des surfaces de guidage (44) au niveau du pontet (12), surfaces de guidage contre lesquelles vient une surface d'appui (20) du bras d'essuie-glace (10) et l'extrémité recourbée (14) du pontet (12) à l'état installé, et
au niveau d'au moins deux passages (34) en regard, les rebords (42) forment des oeillets de palier (46) à l'extérieur du caisson d'accrochage (28) en étant séparés de la partie centrale (54) par des fentes (48) en ayant un perçage de palier (50) adapté aux oeillets de palier (46),
l'adaptateur (38) étant tenu à l'état monté sur le goujon d'articulation (32) par un élément d'enclipsage (58), sur la partie centrale (54) à l'aide de becs d'enclipsage (60).

2. Balai d'essuie-glace selon la revendication 1,
**caractérisé en ce que**
la cloison supérieure (40) de l'adaptateur (38) comporte au niveau du pontet (12), un affaissement (62) sensiblement transversal dont la profondeur est adaptée à l'épaisseur de la matière du pontet (12).

3. Balai d'essuie-glace selon les revendications 1 ou 2,
**caractérisé en ce que**
les passages (34) ont des bords (36) tournés vers l'extérieur et les oeillets de palier (46) ont des cavités (52) correspondant à leur côté intérieur.

4. Balai d'essuie-glace selon l'une des revendications précédentes,
**caractérisé en ce que**
les oeillets de palier (46), le perçage de palier (50) et la broche (22) ont des diamètres et des positions définis en fonction des passages (34) et de l'élément d'encliquetage (58) pour éviter tout contact entre la broche (22) et le balai d'essuie-glace (24) pendant le fonctionnement du balai d'essuie-glace.
